Europäisches Patentamt

European Patent Office

Office européen des brevets

(11) Publication number: **0 215 871**
**B1**

## (12) EUROPEAN PATENT SPECIFICATION

(45) Date of publication of patent specification:
28.06.89

(51) Int. Cl.⁴: **G 01 N 15/04, G 01 N 21/63**

(21) Application number: 86901876.2

(22) Date of filing: 04.03.86

(86) International application number:
PCT/FI 86/00023

(87) International publication number:
WO/8605275 (12.09.86 Gazette 86/20)

(54) METHOD FOR THE MEASUREMENT OF SEDIMENTATION.

(30) Priority: 04.03.85 FI 850870

(43) Date of publication of application:
01.04.87 Bulletin 87/14

(45) Publication of the grant of the patent:
28.06.89 Bulletin 89/26

(84) Designated contracting states:
AT BE CH DE FR GB IT LI LU NL SE

(56) References cited:
WO-A-81/037 04
WO-A-83/033 03
FR-A- 2 413 661
GB-A- 2 038 481

(73) Proprietor: LABSYSTEMS OY
Pulttitie 8
SF-00880 Helsinki (FI)

(72) Inventor: TIUSANEN, Tapani
Estetie 3 E
SF-01280 Vantaa (FI)
Inventor: LUUKKALA, Mauri
Haukilahdenranta 23 B 5
SF-02170 Espoo (FI)

(74) Representative: Bunke, Holger, Dr.rer.nat. Dipl.-
Chem. et al
Patentanwälte Prinz, Leiser, Bunke & Partner Manzin-
gerweg 7
D-8000 München 60 (DE)

## Description

The object of the present invention is to provide a method for measuring the sedimentation of particles in a fluid. The method can be used for example for measuring blood sedimentation rates.

Usually, the desimentation of particles is measured by allowing the suspension to stay in a vessel so long that a process called separation occurs near the surface, in other words, when the particles suspended in a fluid slowly settle due to gravity, a clear layer can be observed at the top. However, observation of this type of sedimentation takes rather a long time, especially if the density of the particles is only slightly greater than that of the fluid. In addition, it is extremely difficult to provide continuous measurement of a slow sedimentation process using conventional optical or visual equipment because the height of the cleared area is only a few fractions of a millimeter.

A classical example of sedimentation is the settling of red blood cells in a 20 mm capillary tube (Westergren). The sedimentation rate is obtained by measuring the height of the yellowish plasma layer developing at the top of an anticoagulated blood sample one hour after the sample in placed in the tube. Such a time-consuming method of measurement is inaccurate and therefore the sedimentation rate is not a very reliable diagnostic test ; see Lancet I (8271), 570-1 (1982).

The photothermic effect has been known for more than one hundred years. The first photo-acoustic measuring equipment for determining the intensity of the pressure wave produced by the heat expansion of gas was developed in the 1940s. A usable theory was finally created in the 1970s ; Parker Appl. Opt. 12, 2974 (1973), Rosencwaig & Gersho J. Appl. Phys. 47, 64, (1976), after which several applications for the photothermic effect have been suggested.

Primarily, the photothermic effect has been utilized for studying the properties of solid materials. See e.g WO-A1-81/03704 or WO-A1-83/03303. The measurements can be made either indirectly using a microphone or a piezoelectric sensor or directly using a thermal radiation detector.

In the method for measuring sedimentation in accordance with the present invention, an intensity modulated light beam is directed at the fluid sample containing the particles to be investigated. The colour of the light must be selected so that it is absorbed by the particles. However, the transmission rate of the surrounding fluid must be as high as possible for the light used. Some of the light used as stimulus is converted into heat, producing a thermal response which, due to modulation, is diffused in the form of a thermic wave throughout the fluid surrounding the particles. A thermic wave travels in a fluid at a certain speed while at the same time being rapidly dissipated. This is affected by the thermal characteristics of the fluid such as density, heat conductivity and specific heat. Both the amplitude and phase of the thermic wave are a function of its distance from the source of heat. The amplitude and phase of the thermic wave produced by the particles can be measured, and the results can be used for calculating the distance of the particles from the boundary surface. For example, the sedimentation rate of the particles can be determined by measuring the change rate of the phase.

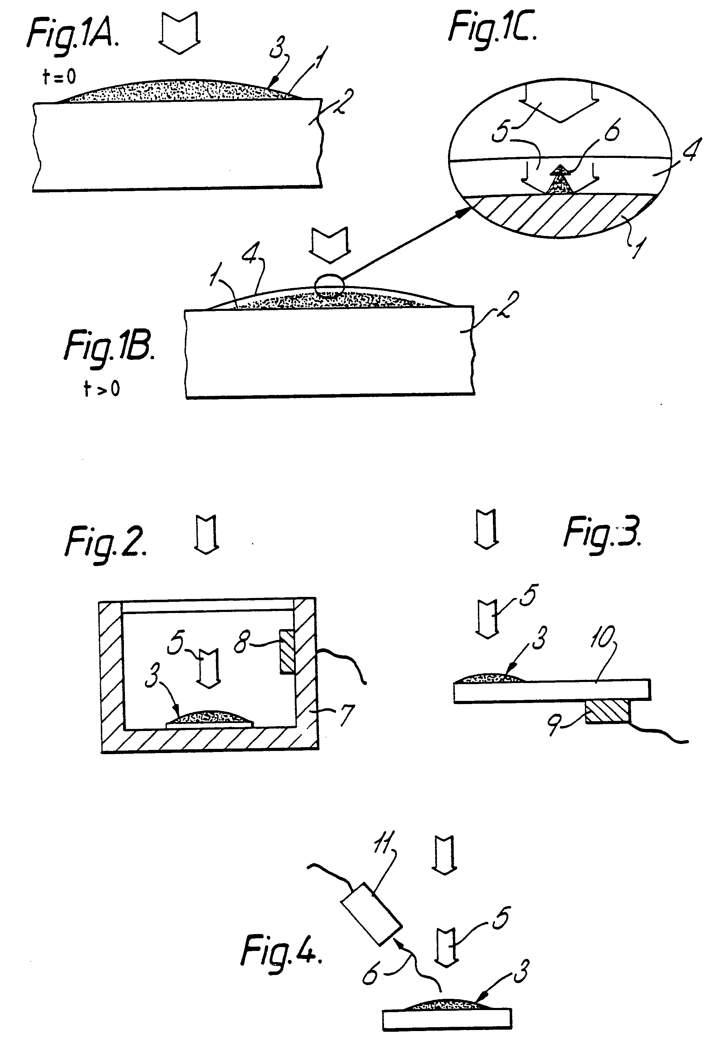

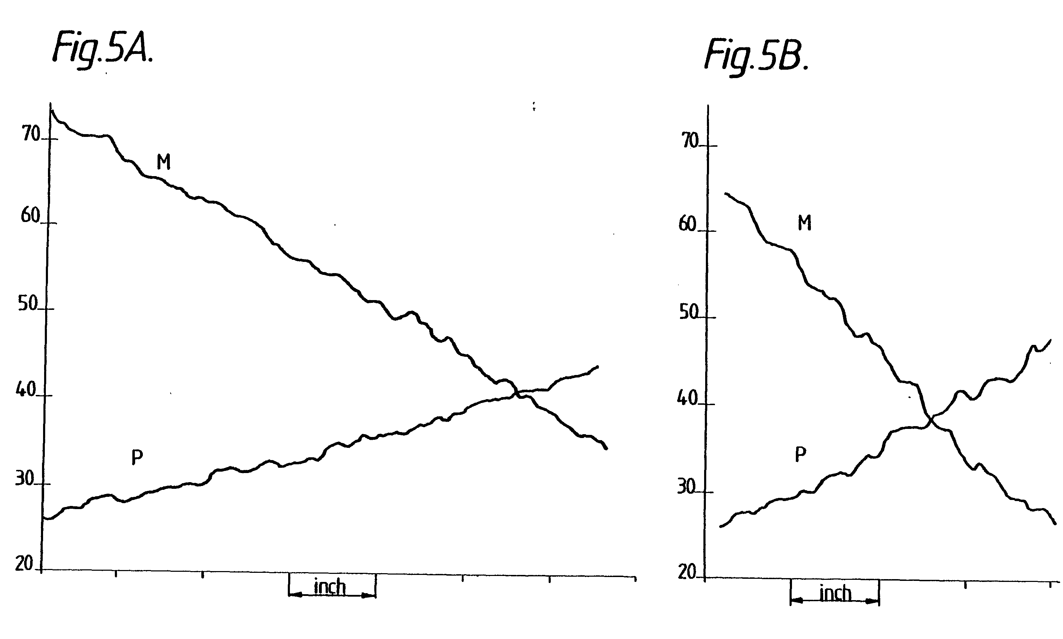

Figure 1 illustrates the measurement of the sedimentation rate using a method in accordance with the present invention, Figures 2 to 4 show different ways of measuring the thermic response while Figure 5 represents graphic output from actual measurements.

Figure 1 shows sedimenting red blood cells 1 in an anticoagulated drop of blood 3 placed on glass plate 2. Figure 1A. shows the situation when the sample is put in place (t = 0). The cells are evenly distributed in the drop of blood. After a while 1.B. (t > 0), a thin plasma film 4 develops over the settling red blood cells 1. This can be seen more clearly in the blown-up detail of Fig. 1C.

An intensity modulated beam of light 5, such as a laser beam, is directed at the sample drop. When the light 5 strikes the boundary surface between the plasma 4 and the red blood cell layer 1, some of the radiation is absorbed by the red blood cells. This produces a thermic wave 6, which is further diffused through the plasma layer 4.

Figures 2 to 4 illustrate different ways of measuring the thermic wave 6.

Figure 2 shows a photo-acoustic cell. The sample 3 is enclosed in an airtight cell 7, in which the pressure variations caused by the periodic stimulus 5 are monitored with a microphone.

The embodiment shown in Figure 3 has a piezo-electric sensor consisting of a crystal 9 and a quartz glass 10 connected to it. The heat generated in the sample 3 causes the glass to expand in the boundary surface between the sample and the glass. The mechanical wave produced thereby is measured with the piezo-electric crystal 9. In this case, the thermic wave is diffused through the settling particles. In Figure 4, the thermic wave 6 is measured directly with an infrared detector 11.

Figure 5 shows the results of two sedimentation measurements (a and b) charted on a plotter. Both the amplitude (M) and phase (P) were monitored as a function of time. The responses were measured from blood samples from two different people, whose sedimentation rates (Westergren) about one hour earlier had been 5 mm/h (a) and 20 mm/h (b). The modulation frequency was 30 Hz. The plotter chart speed was 7.874 s/cm (20 s/inch) while five unit changes of phase is equal to 10°.

Calculations based on the results chartered by the plotter gave an average sedimentation rate of 11 um/min (a) and 35 um/min (b).

If the sedimentation rate were a constant, the hourly values based on the above measurements would be 0.66 mm/h and 2.1 mm/h. When comparing these to the measured sedimentation rates, we see that the difference is tenfold. This is due to the fact that the photothermic measurement was made during the first few minutes of the sedimentation process when clotting had not yet essentially increased the settling velocity. By contrast, the standard one-hour sedimentation rate is affected by three different phases.

The method in accordance with the present invention can be used for measuring the sedimentation rate of any cell suspension. If necessary, the cells can be coloured.

For example, the method can be used for measuring the settling velocity of plastic micropellets. If the different pellets are coloured differently, the settling velocities can be determined individually for each group.

## Claims

1. A method for measuring the sedimentation of particles suspended in a fluid, characterized by an intensity modulated light beam being directed through the upper boundary surface of the fluid and absorbed by the particles but not essentially by the fluid and measuring, at the boundary surface, the amplitude or phase change of the thermic response wave produced by temperature variations caused by the light beam in the particles in relation to the light beam.

2. A method in accordance with patent claim 1, characterized by the measurement being made using a photo-acoustic cell.

3. A method in accordance with patent claim 1, characterized by the measurement being made using an infrared detector.

4. A method in accordance with patent claim 1, characterized by the measurement being made using a piezo-electric sensor.

5. A method in accordance with patent claim 1, characterized by the particles being cells.

6. A method in accordance with patent claim 5, characterized by the cells being red blood cells.

7. A method in accordance with patent claim 5, characterized by the medium being plasma.

8. A method in accordance with patent claim 1, characterized by the particles being plastic pellets.

9. A method in accordance with patent claim 1, characterized by the sedimentation rates of several, differently coloured particles being measured simultaneously.

## Patentansprüche

1. Verfahren zur Messung der Sedimentation von in einem Medium suspendierten Teilchen, dadurch gekennzeichnet, daß ein intensitätsmoduliertes Lichtbündel durch die obere Grenzfläche des Mediums gerichtet und von den Teilchen, jedoch nicht wesentlich vom Medium, absorbiert wird und an der Grenzfläche die Amplituden- oder Phasenänderung der thermisch angeregten Welle gemessen wird, die durch vom Lichtbündel in den Teilchen in Abhängigkeit vom Lichtbündel hervorgerufenen Temperaturänderungen erzeugt wird.

2. Verfahren nach Anspruch 1, dadurch gekennzeichnet, daß die Messung unter Verwendung einer fotoakustischen Zelle durchgeführt wird.

3. Verfahren nach Anspruch 1, dadurch gekennzeichnet, daß die Messung unter Verwendung eines Infrarotdetektors durchgeführt wird.

4. Verfahren nach Anspruch 1, dadurch gekennzeichnet, daß die Messung unter Verwendung eines piezoelektrischen Sensors durchgeführt wird.

5. Verfahren nach Anspruch 1, dadurch gekennzeichnet, daß die Teilchen Zellen sind.

6. Verfahren nach Anspruch 5, dadurch gekennzeichnet, daß die Zellen rote Blutzellen sind.

7. Verfahren nach Anspruch 5, dadurch gekennzeichnet, daß das Medium Plasma ist.

8. Verfahren nach Anspruch 1, dadurch gekennzeichnet, daß die Teilchen Kunststoffpellets sind.

9. Verfahren nach Anspruch 1, dadurch gekennzeichnet, daß die Sedimentationsgeschwindigkeiten mehrerer verschieden gefärbter Teilchen gleichzeitig gemessen wird.

## Revendications

1. Procédé de mesure de la sédimentation de particules en suspension dans un fluide, caractérisé par le fait qu'un faisceau de lumière modulé en intensité est envoyé directement à travers la surface limite supérieure du fluide et est absorbé par les particules, mais pratiquement pas par le fluide, et que l'on mesure, à la surface limite, la variation d'amplitude ou de phase de l'onde de réponse thermique produite par les variations de température dues à la source de lumière dans les particules en relation avec le faisceau de lumière.

2. Procédé selon la revendication 1, caractérisé par le fait que la mesure est effectuée en utilisant une cellule photo-acoustique.

3. Procédé selon la revendication 1, caractérisé par le fait que la mesure est effectuée en utilisant un détecteur infrarouge.

4. Procédé selon la revendication 1, caractérisé par le fait que la mesure est effectuée en utilisant un capteur piézoélectrique.

5. Procédé selon la revendication 1, caractérisé par le fait que les particules sont des cellules.

6. Procédé selon la revendication 1, caractérisé par le fait que les cellules sont des érythrocytes.

7. Procédé selon la revendication 1, caractérisé par le fait que le milieu est du plasma.

8. Procédé selon la revendication 1, caractérisé par le fait que les particules sont des granulés de matière plastique.

9. Procédé selon la revendication 1, caractérisé par le fait qu'on mesure simultanément les vitesses de sédimentation de plusieurs particules de couleurs différentes.

EP 0 215 871 B1

Fig.1A.

t = 0

Fig.1C.

Fig.1B.

t > 0

Fig.2.

Fig.3.

Fig.4.

1

Fig.5A.

Fig.5B.

EP 0 215 871 B1